# EUROPEAN PATENT APPLICATION

(11) **EP 4 397 794 A1**
(43) Date of publication of application: **10.07.2024**
(21) Application number: 22865020.6
(22) Date of filing: 30.08.2022
(51) Int. Cl.: D01F 6/84, D01F 1/10, D01F 1/04, D04H 1/435

(54) **COMPOSITION FOR BIODEGRADABLE FIBER AND BIODEGRADABLE FIBER MANUFACTURED USING SAME**

(30) Priority: 31.08.2021 KR 20210115993; 31.05.2022 KR 20220067166
(71) Applicant: CJ Cheiljedang Corporation, Seoul 04560 (KR)
(72) Inventor: SONG, Bo-Seok, Seoul 04560 (KR); YOON, Ki Chull, Seoul 04560 (KR); JUNG, Minho, Seoul 04560 (KR); SIM, Eun Jung, Seoul 04560 (KR)
(74) Representative: Dehns
(86) International application number: PCT/KR2022/012960
(87) International publication number: WO 2023/033518

(57) **Abstract**

The present invention relates to a composition for a biodegradable fiber and a biodegradable fiber manufactured using same. In detail, according to an embodiment of the present invention, the composition for biodegradable fibers contains a polyhydroxyalkanoate (PHA) resin bearing 4-hydroxybutyrate (4-HB) repeating units and specifically a first PHA resin and/or a second PHA resin, each bearing 4-HB repeating units and meets a degradation temperature (Td 5% weight loss) of 220°C or higher as measured by a thermal gravimetric analyzer. Thus, the composition is eco-friendly with excellent biodegradability and biocompatibility and can be used to easily manufacture biodegradable fibers having excellent properties.

## Description

### Technical Field

The present invention relates to a composition for a biodegradable fiber and to a biodegradable fiber prepared therefrom.

### Background Art

In recent years, as concerns about environmental problems increase, research on the treatment and recycling of various household wastes is being actively conducted. Specifically, although polymer materials, which are inexpensive and have excellent processability, are widely used to manufacture various products such as paper, films, fibers, packaging materials, bottles, and containers, when the lifespan of these products is over, harmful substances may be discharged when they are incinerated, and it takes hundreds of years depending on their types to completely decompose naturally.

Therefore, research on biodegradable polymers continues, which can be decomposed within a short period of time to enhance environmental friendliness, while enhancing mechanical properties such as flexibility and strength, productivity, and processability, and increasing the lifespan of products themselves, thereby reducing the amount of waste or enhancing their recyclability.

Polyhydroxyalkanoates (PHA) are biodegradable polymers composed of several types of hydroxyl carboxylic acids produced by numerous microorganisms and used as intracellular storage materials. Polyhydroxyalkanoates have physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

Meanwhile, biodegradable fibers made of biodegradable polymers are widely used in non-woven fabrics, disposable tissues, packaging materials, masks, industrial materials such as engineering plastics, or filters for air cleaners and the like. However, since it is difficult to collect or recycle these products after their use, they are left unattended in the soil or the ocean, thereby seriously polluting the environment. Therefore, although biodegradable fibers with enhanced biodegradability are being applied, it is difficult to apply various processes or expand their uses in various ways since the raw materials are expensive, and there is a limit to enhancing physical properties such as mechanical strength. Accordingly, there is a need for the development of biodegradable fibers that are capable of enhancing all of such characteristics as flexibility, strength, and processability while being environmentally friendly by virtue of excellent biodegradability and biocompatibility.

### [Prior Art Document]

### [Patent Document]

(Patent Document 1) Korean Laid-open Patent Publication No. 2012-0103158

### Disclosure of Invention

### Technical Problem

Accordingly, the present invention aims to provide a biodegradable fiber composition capable of enhancing all of flexibility, strength, and processability while being environmentally friendly by virtue of excellent biodegradability and biocompatibility and a biodegradable fiber prepared using the same.

### Solution to Problem

The composition for a biodegradable fiber according to an embodiment of the present invention comprises a polyhydroxyalkanoate resin comprising a 4-hydroxybutyrate (4-HB) repeat unit, wherein the degradation temperature (Td, weight loss of 5%) measured by a thermogravimetric analyzer (TGA) is 220°C or higher.

According to an embodiment of the present invention, the polyhydroxyalkanoate resin may comprise the 4-hydroxybutyrate (4-HB) repeat unit in an amount of 0.1% by weight to 60% by weight.

According to an embodiment of the present invention, the polyhydroxyalkanoate resin may further comprise at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

According to an embodiment of the present invention, the polyhydroxyalkanoate resin may comprise a first PHA resin.

According to an embodiment of the present invention, the first PHA resin may comprise a 4-hydroxybutyrate (4-HB) repeat unit in an amount of 15% by weight to 60% by weight and have a melt flow index (MFI) of 0.1 g/10 minutes to 20 g/10 minutes as measured at 165°C and 5 kg according to ASTM D1238.

According to an embodiment of the present invention, the polyhydroxyalkanoate resin may comprise a second PHA resin.

According to an embodiment of the present invention, the second PHA resin may comprise a 4-hydroxybutyrate (4-HB) repeat unit in an amount of 0.1% by weight to 30% by weight and have a melt flow index of 0.1 g/10 minutes to 15 g/10 minutes as measured at 165°C and 5 kg according to ASTM D1238.

According to an embodiment of the present invention, the polyhydroxyalkanoate resin may comprise a first PHA resin and a second PHA resin, and the content of 4-HB repeat unit of the first PHA resin and the content of 4-HB repeat unit of the second PHA may be different from each other.

According to an embodiment of the present invention, the weight ratio of the first PHA resin to the second PHA resin may be 1:0.5 to 5.

According to an embodiment of the present invention, the polyhydroxyalkanoate resin may be employed in an amount of 10% by weight to 100% by weight based on the total weight of the composition for a biodegradable fiber.

According to an embodiment of the present invention, the composition for a biodegradable fiber may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), and thermoplastic starch (TPS).

According to an embodiment of the present invention, the biodegradable resin may be employed in an amount of 30% by weight or more based on the total weight of the composition for a biodegradable fiber, and the weight ratio of the polyhydroxyalkanoate resin to the biodegradable resin may be 1: 0.2 to 4.5.

According to an embodiment of the present invention, the composition for a biodegradable fiber may comprise at least one additive selected from the group consisting of pigments, dye absorbers, light absorbers, antioxidants, compatibilizers, weighting agents, nucleating agents, melt strength agents, and slip agents.

According to an embodiment of the present invention, the composition for a biodegradable fiber may have a melt flow index of 1 g/10 minutes to 30 g/10 minutes as measured at 190°C and 2.16 kg according to ASTM D1238, a melt flow index of 35 g/10 minutes to 130 g/10 minutes as measured at 210°C and 2.16 kg, a glass transition temperature (Tg) of -35°C to 15°C as measured by differential scanning calorimetry (DSC), a melting temperature (Tm) of 105°C to 200°C, and a decomposition temperature (Td, weight loss of 5%) of 240°C to 300°C as measured by a thermogravimetric analyzer (TGA).

The biodegradable fiber according to another embodiment of the present invention comprises a polyhydroxyalkanoate resin comprising a 4-hydroxybutyrate (4-HB) repeat unit, wherein the strength measured according to ASTM D3822 is 0.5 g/d to 10 g/d.

According to another embodiment of the present invention, the biodegradable fiber may have a diameter of 0.05 mm to 10 mm, a fineness of 100 deniers to 10,000 deniers, and an elongation of 10% or more.

According to another embodiment of the present invention, the biodegradable fiber may be a composite fiber of a heterogeneous cross-section or a composite fiber of two or more or three or more components.

According to another embodiment of the present invention, the biodegradable fiber may be a sheath-core type comprising a core part and a sheath part, a side-by-side type, a sea-islands type, or a segmented-pie type.

According to an embodiment of the present invention, the core part may comprise the polyhydroxyalkanoate resin, the sheath part may comprise a biodegradable resin, and the biodegradable resin may be at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

The process for preparing a biodegradable fiber according to still another embodiment of the present invention comprises spinning and drawing a composition for a biodegradable fiber or pellets prepared by melt-extruding the same, wherein the composition for a biodegradable fiber comprises a polyhydroxyalkanoate resin comprising a 4-hydroxybutyrate (4-HB) repeat unit, and the degradation temperature (Td, weight loss of 5%) measured by a thermogravimetric analyzer (TGA) is 220°C or higher.

According to still another embodiment of the present invention, the spinning speed may be 10 mpm to 500 mpm, the drawing may be carried out by cold drawing or hot drawing at a drawing ratio of 1.1 times or more, the cold drawing may be carried out at a chamber temperature of 25°C to 35°C and a roller temperature of 25°C to 35°C, and the hot drawing may be carried out at a chamber temperature of 150°C to 200°C and a roller temperature of 80°C to 130°C.

According to still another embodiment of the present invention, it may further comprise melt-extruding the composition for a biodegradable fiber at 150°C to 200°C to prepare pellets.

According to still another embodiment of the present invention, the step of spinning pellets may be melt-spinning the pellets at 140°C to 190°C, and the process may further comprise, prior to the melt-spinning step, drying the pellets at 40°C to 60°C for 10 hours or longer.

According to still another embodiment of the present invention, the step of spinning a composition for a biodegradable fiber may be carried out using a sheath-core composite spinning apparatus.

According to still another embodiment of the present invention, the weight ratio of raw materials to be fed to the core part and the sheath part may be 5:95 to 95:5.

According to still another embodiment of the present invention, the composition for a biodegradable fiber may be fed to the core part.

### Advantageous Effects of Invention

The composition for a biodegradable fiber according to an embodiment of the present invention comprises a polyhydroxyalkanoate (PHA) resin, which is a copolymerized polyhydroxyalkanoate resin comprising a 4-hydroxybutyrate (4-HB) repeat unit, specifically, a first PHA resin and/or a second PHA resin each having a 4-HB repeat unit, whereby the degradation temperature (Td, weight loss of 5%) measured by a thermogravimetric analyzer (TGA) satisfies 220°C or higher. Thus, it is possible to enhance such characteristics as flexibility, strength, and processability while being environmentally friendly by virtue of excellent biodegradability and biocompatibility.

Further, not only can a biodegradable fiber be prepared directly from the composition for a biodegradable fiber, but also a biodegradable fiber can be prepared using biodegradable pellets obtained from the composition for a biodegradable fiber, which provides convenient selection and application of a process as needed.

In addition, since the composition for a biodegradable fiber and the biodegradable fiber prepared therefrom are biodegradable in both soil and sea, along with excellent thermal and mechanical properties, they can be advantageously applied to more diverse fields to exhibit excellent characteristics.

### Best Mode for Carrying out Invention

Hereinafter, the present invention will be described in detail. The present invention is not limited to the disclosures given below, but it may be modified into various forms as long as the gist of the invention is not changed.

Throughout the present specification, when a part is referred to as "comprising" an element, it is understood that other elements may be comprised, rather than other elements are excluded, unless specifically stated otherwise.

All numbers and expressions related to the quantities of components, reaction conditions, and the like used herein are to be understood as being modified by the term "about," unless otherwise indicated.

Throughout the present specification, the terms first, second, and the like are used to describe various components. But the components should not be limited by the terms. The terms are used only for the purpose of distinguishing one component from another.

### Composition for a biodegradable fiber

A biodegradable fiber refers to a fiber that becomes inorganic substances by the scission of its chains introduced into the fiber by microorganisms. In recent years, as concerns about environmental problems increase, it is widely used for the treatment and recycling of various household wastes.

For example, a biodegradable fiber is widely used in hygiene and medical products such as diapers, feminine products, sutures, and gauzes, household products such as disposable products and outdoor leisure products, industrial products such as packaging materials, agricultural products such as cladding materials, fishery products such as seaweed nets and fishing nets, and the like.

However, despite the advantages of biodegradable fibers that are environmentally friendly and produce less waste, it is difficult to apply biodegradable fibers to various fields due to limitations in mechanical and thermal properties, specifically, physical properties such as flexibility, durability, and strength.

The composition for a biodegradable fiber according to an embodiment of the present invention comprises a polyhydroxyalkanoate resin comprising a 4-hydroxybutyrate (4-HB) repeat unit.

Specifically, the composition for a biodegradable fiber according to an embodiment of the present invention comprises a polyhydroxyalkanoate (PHA) resin, which is a copolymerized polyhydroxyalkanoate resin comprising a 4-hydroxybutyrate (4-HB) repeat unit, specifically, a first PHA resin and/or a second PHA resin having a 4-HB repeat unit, whereby it is environmentally friendly by virtue of excellent biodegradability and biocompatibility, and it is possible to readily prepare a biodegradable fiber having excellent characteristics.

Further, conventional compositions for biodegradable fibers not only are expensive, but also do not have physical properties suitable for preparing pellets, making it difficult to produce pellets; thus, the process is limited. In contrast, the composition for a biodegradable fiber according to an embodiment of the present invention has excellent dispersibility and satisfies physical properties such as glass transition temperature, melting temperature, and decomposition temperature of appropriate numerical ranges; thus, it is possible to readily prepare biodegradable pellets using the same.

Accordingly, not only can a biodegradable fiber be prepared directly from the composition for a biodegradable fiber, but also a biodegradable fiber can be prepared using biodegradable pellets obtained from the composition for a biodegradable fiber, which provides advantages of convenient selection and application of a process as needed.

In addition, since the composition for a biodegradable fiber and the biodegradable fiber prepared therefrom are biodegradable in both soil and sea, along with excellent thermal and mechanical properties, they can be advantageously applied to more diverse fields to exhibit excellent characteristics.

The composition for a biodegradable fiber according to an embodiment of the present invention comprises a polyhydroxyalkanoate (PHA) resin.

PHA is a thermoplastic natural polyester polymer that accumulates in microbial cells. Since it is a biodegradable material, it can be composted and finally decomposed into carbon dioxide, water, and organic waste without generating toxic waste. In particular, since PHA is biodegradable even in soil and sea, when the composition for a biodegradable fiber and the biodegradable fiber prepared using the same comprise a PHA resin, it may have environmentally friendly characteristics. Thus, the composition for a biodegradable fiber and the biodegradable fiber prepared using the same have a great advantage in that it can be used in various fields since it is biodegradable and environmentally friendly.

Specifically, PHA is a thermoplastic natural polyester polymer that accumulates in microbial cells. It is formed by accumulating PHA in cells to store carbon and energy when certain bacteria are supplied with nutrients (nitrogen source, phosphorus, etc.) disproportionately.

In addition, PHA has physical properties similar to those of conventional petroleum-derived synthetic polymers such as polybutylene adipate terephthalate (PBAT), polybutylene succinate (PBS), polybutylene succinate terephthalate (PBST), and polybutylene succinate adipate (PBSA), exhibit complete biodegradability, and are excellent in biocompatibility.

In particular, unlike other environmentally friendly plastic materials such as PBS, PLA, and PTT, PHA can be synthesized from more than 150 types of monomers, so that hundreds of types of PHA can be prepared depending on the types of monomers. Hundreds of different types of PHA depending on the types of monomers have completely different structures and properties.

A PHA resin may be composed of a single monomer repeat unit in living cells and may be formed by polymerizing one or more monomer repeat units. Specifically, the PHA resin may be a homo-polyhydroxyalkanoate resin (hereinafter, referred to as HOMO PHA resin) or a copolymerized polyhydroxyalkanoate resin (hereinafter, referred to as a copolymerized PHA resin), that is, a copolymer in which different repeat units are randomly distributed in a polymer chain.

Examples of repeat units that may be contained in the PHA resin include 2-hydroxybutyrate, lactic acid, glycolic acid, 3-hydroxybutyrate (hereinafter, referred to as 3-HB), 3-hydroxypropionate (hereinafter, referred to as 3-HP), 3-hydroxyvalerate (hereinafter, referred to as 3-HV), 3-hydroxyhexanoate (hereinafter, referred to as 3-HH), 3-hydroxyheptanoate (hereinafter, referred to as 3-HHep), 3-hydroxyoctanoate (hereinafter, referred to as 3-HO), 3-hydroxynonanoate (hereinafter, referred to as 3-HN), 3-hydroxydecanoate (hereinafter, referred to as 3-HD), 3-hydroxydodecanoate (hereinafter, referred to as 3-HDd), 4-hydroxybutyrate (hereinafter, referred to as 4-HB), 4-hydroxyvalerate (hereinafter, referred to as 4-HV), 5-hydroxyvalerate (hereinafter, referred to as 5-HV), and 6-hydroxyhexanoate (hereinafter, referred to as 6-HH). The PHA resin may contain one or more repeat units selected from the above.

Specifically, the PHA resin may comprise one or more repeating units selected from the group consisting of 3-HB, 4-HB, 3-HP, 3-HH, 3-HV, 4-HV, 5-HV, and 6-HH.

More specifically, the PHA resin may comprise a 4-HB repeat unit in an amount of 0.1% by weight to 100% by weight. For example, the PHA resin may comprise a 4-HB repeat unit in an amount of 0.2% by weight to 100% by weight, 0.5% by weight to 100% by weight, 1% by weight to 100% by weight, 5% by weight to 100% by weight, 10% by weight to 100% by weight, 20% by weight to 100% by weight, 30% by weight to 100% by weight, 40% by weight to 100% by weight, 50% by weight to 100% by weight, 60% by weight to 100% by weight, 70% by weight to 100% by weight, 80% by weight to 100% by weight, or 90% by weight to 100% by weight.

That is, the PHA resin may be a HOMO PHA resin composed of a 4-HB repeat unit alone or a copolymerized PHA resin comprising a 4-HB repeat unit.

In addition, the PHA resin may be a copolymerized PHA resin that comprises a 4-HB repeat unit and further comprises one repeat unit different from the 4-HB repeat unit, or two, three, four, five, six, or more repeat units different from each other. For example, the PHA resin may be poly-3-hydroxybutyrate-co-4-hydroxybutyrate (hereinafter, referred to as 3HB-co-4HB).

In addition, the PHA resin may comprise isomers. For example, the PHA resin may comprise structural isomers, enantiomers, or geometric isomers. Specifically, the PHA resin may comprise structural isomers.

In addition, the PHA resin may be a copolymerized PHA resin with controlled crystallinity. For example, the PHA resin may comprise at least one or more of a 4-HB repeating unit, and the content of the 4-HB repeat unit may be controlled to adjust the crystallinity of the PHA resin.

For example, the PHA resin may be a copolymerized PHA resin that comprises at least one repeat unit selected from the group consisting of 3-hydroxybutyrate (3-HB), 4-hydroxybutyrate (4-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

Specifically, the copolymerized PHA resin may comprise a 4-HB repeat unit and further comprises one or more repeat units selected from the group consisting of a 3-HB repeat unit, a 3-HP repeat unit, a 3-HH repeat unit, a 3-HV repeat unit, a 4-HV repeat unit, a 5-HV repeat unit, and a 6-HH repeat unit. More specifically, the PHA resin may comprise a 4-HB repeat unit and a 3-HB repeat unit.

More specifically, the PHA resin may be a copolymerized PHA resin comprising a 4-HB repeat unit and a 3-HB repeat unit and may comprise the 4-HB repeat unit in an amount of 0.1% by weight to 60% by weight. For example, the PHA resin may comprise the 4-HB repeat unit in an amount of 0.1% by weight to 55% by weight, 0.5% by weight to 50% by weight, 1% by weight to 49% by weight, 3% by weight to 48% by weight, 5% by weight to 48% by weight, 6% by weight to 35% by weight, 7% by weight to 30% by weight, 15% by weight to 50% by weight, 10% by weight to 40% by weight, 10% by weight to 30% by weight, 10% by weight to 20% by weight, 20% by weight to 30% by weight, 20% by weight to 40% by weight, 35% by weight to 49% by weight, or 6% by weight to 28% by weight.

In addition, the PHA resin may be a copolymerized PHA resin comprising a 4-HB repeat unit and a 3-HB repeat unit and may comprise the 3-HB repeat unit in an amount of 20% by weight or more. For example, the PHA resin may comprise the 3-HB repeat unit in an amount of 35% by weight or more, 40% by weight or more, 50% by weight or more, 60% by weight or more, 70% by weight or more, or 75% by weight or more, and 99% by weight or less, 98% by weight or less, 97% by weight or less, 96% by weight or less, 95% by weight or less, 93% by weight or less, 91% by weight or less, 90% by weight or less, 80% by weight or less, 70% by weight or less, 60% by weight or less, or 55% by weight or less.

The PHA resin whose crystallinity is adjusted may be one in which crystallinity and amorphousness are adjusted as the irregularities are increased in its molecular structure. Specifically, the types or ratios of the monomers or the types or contents of the isomers may be adjusted.

According to an embodiment of the present invention, the PHA resin may comprise two or more types of PHA resins having different crystallinities. Specifically, the PHA resin may be prepared by mixing two or more types of PHA resins having different crystallinities to have the content of a 4-HB repeat unit in the specific range.

Specifically, the PHA resin may comprise a first PHA, which is an amorphous PHA resin with controlled crystallinity.

As an amorphous PHA resin (hereinafter, referred to as aPHA resin) with controlled crystallinity, the first PHA resin may comprise a 4-HB repeat unit in an amount of 15% by weight to 60% by weight, 15% by weight to 55% by weight, 20% by weight to 55% by weight, 25% by weight to 55% by weight, 30% by weight to 55% by weight, 35% by weight to 55% by weight, 20% by weight to 50% by weight, 25% by weight to 50% by weight, 30% by weight to 50% by weight, 35% by weight to 50% by weight, or 20% by weight to 40% by weight.

The glass transition temperature (Tg) of the first PHA resin may be -45°C to - 10°C, -35°C to -15°C, -35°C to -20°C, or -30°C to -20°C. In addition, the crystallization temperature (Tc) of the first PHA resin may not be measured or may be 60°C to 120°C, 60°C to 110°C, 70°C to 120°C, or 75°C to 115°C. The melting temperature (Tm) of the first PHA resin may not be measured or may be 100°C to 170°C, 100°C to 160°C, 110°C to 160°C, or 120°C to 150°C.

In the present specification, the glass transition temperature (Tg), crystallization temperature (Tc), and melting temperature (Tm) may be measured using a differential scanning calorimeter (DSC). Specifically, the glass transition temperature (Tg), crystallization temperature (Tc), and melting temperature (Tm) may be measured by conducting a first scan or a second scan in a differential scanning calorimetry (DSC) mode, and they can be confirmed from a heat flow curve obtained by these scans. More specifically, the glass transition temperature (Tg), crystallization temperature (Tc), and melting temperature (Tm) may be confirmed from a heat flow curve obtained by raising the temperature from 40°C to 180°C at a rate of 10°C/minute and then cooling it to -50°C at a rate of 10°C/minute.

The first PHA resin may have a melt flow index (MFI) of 0.1 g/10 minutes to 20 g/10 minutes measured at 165°C and 5 kg according to ASTM D1238. For example, the melt flow index (MFI) of the first PHA resin measured at 165°C and 5 kg according to ASTM D1238 may be 0.1 g/10 minutes to 15 g/10 minutes, 0.1 g/10 minutes to 12 g/10 minutes, 0.1 g/10 minutes to 10 g/10 minutes, 0.1 g/10 minutes to 8 g/10 minutes, 0.1 g/10 minutes to 6 g/10 minutes, 0.1 g/10 minutes to 5.5 g/10 minutes, 0.5 g/10 minutes to 10 g/10 minutes, 1 g/10 minutes to 10 g/10 minutes, 2 g/10 minutes to 8 g/10 minutes, 3 g/10 minutes to 6 g/10 minutes, or 3 g/10 minutes to 5.5 g/10 minutes.

The first PHA resin may have a weight average molecular weight of 10,000 g/mole to 1,200,000 g/mole, 10,000 g/mole to 1,000,000 g/mole, 50,000 g/mole to 1,000,000 g/mole, 200,000 g/mole to 1,200,000 g/mole, 250,000 g/mole to 1,000,000 g/mole, 100,000 g/mole to 900,000 g/mole, 500,000 g/mole to 900,000 g/mole, 200,000 g/mole to 800,000 g/mole, or 200,000 g/mole to 500,000 g/mole.

In addition, the PHA resin may comprise a second PHA resin that is a semi-crystalline PHA resin.

As a semi-crystalline PHA resin (hereinafter, referred to as scPHA resin) with controlled crystallinity, the second PHA resin may comprise a 4-HB repeat unit in an amount of 0.1% by weight to 30% by weight. For example, the second PHA resin may comprise the 4-HB repeat unit in an amount of 0.1% by weight to 30% by weight, 0.5% by weight to 30% by weight, 1% by weight to 29% by weight, 3% by weight to 29% by weight, 1% by weight to 28% by weight, 1.5% by weight to 25% by weight, 2% by weight to 20% by weight, 2.5% by weight to 15% by weight, 3% by weight to 25% by weight, 5% by weight to 21% by weight, 7% by weight to 18% by weight, 10% by weight to 30% by weight, 10% by weight to 20% by weight, 15% by weight to 23% by weight, or 20% by weight to 30% by weight.

The glass transition temperature (Tg) of the second PHA resin may be -30°C to 80°C, -30°C to 10°C, -25°C to 5°C, -25°C to 0°C, -20°C to 0°C, or -15°C to 0°C. The crystallization temperature (Tc) of the second PHA resin may be 70°C to 120°C, 75°C to 120°C, or 75°C to 115°C. The melting temperature (Tm) of the second PHA resin may be 105°C to 165°C, 110°C to 160°C, 115°C to 155°C, or 120°C to 150°C.

In addition, the second PHA resin may have a melt flow index of 0.1 g/10 minutes to 15 g/10 minutes measured at 165°C and 5 kg according to ASTM D1238. For example, the melt flow index (MFI) of the second PHA resin measured at 165°C and 5 kg according to ASTM D1238 may be 0.1 g/10 minutes to 10 g/10 minutes, 0.2 g/10 minutes to 7 g/10 minutes, 0.5 g/10 minutes to 5.5 g/10 minutes, 0.6 g/10 minutes to 5 g/10 minutes, 0.8 g/10 minutes to 5 g/10 minutes, 1 g/10 minutes to 5 g/10 minutes, 0.1 g/10 minutes to 5 g/10 minutes, 1 g/10 minutes to 6.5 g/10 minutes, 1.5 g/10 minutes to 15 g/10 minutes, 3 g/10 minutes to 10 g/10 minutes, 3.5 g/10 minutes to 12 g/10 minutes, or 4.5 g/10 minutes to 10 g/10 minutes.

The second PHA resin may have a weight average molecular weight of 10,000 g/mole to 1,200,000 g/mole, 50,000 g/mole to 1,100,000 g/mole, 50,000 g/mole to 350,000 g/mole, 100,000 g/mole to 1,000,000 g/mole, 100,000 g/mole to 900,000 g/mole, 200,000 g/mole to 800,000 g/mole, 200,000 g/mole to 600,000 g/mole, 200,000 g/mole to 500,000 g/mole, or 500,000 g/mole to 1,200,000 g/mole.

The first PHA resin and the second PHA resin may be distinguished in terms of the content of a 4-HB repeat unit and may have at least one characteristic selected from the group consisting of the glass transition temperature (Tg), crystallization temperature (Tc), melting temperature (Tm), and melt flow index. Specifically, the first PHA and the second PHA may be distinguished in terms of the content of a 4-HB repeat unit, glass transition temperature (Tg), crystallization temperature (Tg), melting temperature (Tm), melt flow index, and the like. For example, the content of a 4-HB repeat unit of the first PHA resin and the content of a 4-HB repeat unit of the second PHA may be different from each other.

According to an embodiment of the present invention, the PHA resin may comprise the first PHA resin or the second PHA resin, or it may comprise both the first PHA resin and the second PHA resin.

Specifically, as the PHA resin comprises the first PHA resin, which is an amorphous PHA resin, or both the first PHA resin, which is an amorphous PHA resin, and the second PHA resin, which is a semi-crystalline PHA resin, more specifically, as the contents of the first PHA resin and the second PHA resin are adjusted, it is possible to more effectively control the desired physical properties.

According to an embodiment of the present invention, the PHA resin may comprise the first PHA resin or the second PHA resin. Specifically, the PHA resin may be composed of only the first PHA resin or only the second PHA.

According to another embodiment of the present invention, the PHA resin may comprise the first PHA resin and the second PHA resin. In such an event, the weight ratio of the first PHA resin to the second PHA resin may be 1:0.5 to 5. For example, the weight ratio of the first PHA resin to the second PHA resin may be 1:0.5 to 4.5, 1:0.6 to 4.2, or 1:0.7 to 3.5. As the weight ratio of the first PHA resin to the second PHA resin satisfies the above range, it is possible to more effectively control the desired physical properties.

In addition, the glass transition temperature (Tg) of the PHA resin may be -45°C to 80°C, -35°C to 80°C, -30°C to 80°C, -25°C to 75°C, -20°C to 70°C, -35°C to 5°C, - 25°C to 5°C, -35°C to 0°C, -25°C to 0°C, -30°C to -10°C, -35°C to -15°C, -35°C to - 20°C, -20°C to 0°C, -15°C to 0°C, or -15°C to -5°C.

In addition, the crystallization temperature (Tc) of the PHA resin may not be measured or may be 60°C to 120°C, 60°C to 110°C, 70°C to 120°C, 75°C to 120°C, 75°C to 115°C, 75°C to 110°C, or 90°C to 110°C.

The melting temperature (Tm) of the PHA resin may not be measured or may be 100°C to 170°C, 105°C to 170°C, 105°C to 165°C, 110°C to 160°C, 115°C to 155°C, 110°C to 150°C, 120°C to 150°C, or 120°C to 140°C.

The PHA resin may have a decomposition temperature (Td, weight loss of 5%) of 220°C to 280°C, 245°C to 275°C, 255°C to 270°C, or 260°C to 270°C, as measured by a thermogravimetric analyzer (TGA).

In the present specification, the decomposition temperature (Td) may be measured using a thermogravimetric analyzer (TGA). Specifically, the decomposition temperature (Td) may be confirmed as a temperature at which the weight of the PHA resin is reduced by 5% from a weight change curve obtained by raising the temperature from room temperature to 600°C at a rate of 10°C/minute using a thermogravimetric analyzer (TGA).

In addition, the PHA resin may have a weight average molecular weight of 10,000 g/mole to 1,200,000 g/mole. For example, the weight average molecular weight of the PHA resin may be 50,000 g/mole to 1,200,000 g/mole, 100,000 g/mole to 1,000,000 g/mole, 200,000 g/mole to 1,200,000 g/mole, 250,000 g/mole to 1,150,000 g/mole, 300,000 g/mole to 1,100,000 g/mole, 350,000 g/mole to 950,000 g/mole, 100,000 g/mole to 900,000 g/mole, 200,000 g/mole to 800,000 g/mole, 250,000 g/mole to 650,000 g/mole, 200,000 g/mole to 400,000 g/mole, 300,000 g/mole to 600,000 g/mole, 500,000 g/mole to 1,200,000 g/mole, 500,000 g/mole to 1,000,000 g/mole 550,000 g/mole to 1,050,000 g/mole, 550,000 g/mole to 900,000 g/mole, 600,000 g/mole to 900,000 g/mole, or 500,000 g/mole to 900,000 g/mole.

The PHA resin may have a crystallinity of 90% or less as measured by a differential scanning calorimeter (DSC). For example, the crystallinity of the PHA resin may be measured by differential scanning calorimetry and may be 90% or less, 85% or less, 80% or less, 75% or less, or 70% or less.

In addition, the PHA resin may have an average particle size of 0.5 µm to 5 µm. For example, the average particle size of the PHA resin may be 0.7 µm to 4.6 µm, 1.1 µm to 4.5 µm, 1.5 µm to 4.3 µm, 2.2 µm to 4.2 µm, 2.6 µm to 4.0 µm, 2.8 µm to 3.9 µm, or 3.1 µm to 3.8 µm.

The average particle size of the PHA resin may be measured with a nano particle size analyzer (e.g., Zetasizer Nano ZS). Specifically, the PHA is subjected to measurement of average particle size through dynamic light scattering (DLS) at a temperature of 25°C and a measurement angle of 175° using Zetasizer Nano ZS (manufacturer: Marven). In such an event, the value of the peak derived through the polydispersity index (PDI) in the confidence interval of 0.5 is taken as the particle size. The PHA resin may have a polydispersity index (PDI) of less than 2.5. For example, the polydispersity index of the PHA resin may be less than 2.5, 2.3 or less, 2.1 or less, or 2.0 or less.

In addition, the PHA resin may be obtained by cell disruption using a nonmechanical method or a chemical method. Specifically, since the PHA resin is a thermoplastic natural polyester polymer that accumulates in microbial cells and has a relatively large average particle size, it may be obtained through a disruption process in order to more effectively control the yield or physical properties of the desired material and enhance the process efficiency.

Meanwhile, according to another embodiment of the present invention, the composition for a biodegradable fiber may comprise at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

As the biodegradable resin is employed together with the PHA resin, the composition for a biodegradable fiber has excellent dispersibility, and such properties as melt flow index, glass transition temperature, melting temperature, and decomposition temperature may be further enhanced.

The composition for a biodegradable fiber may comprise the polyhydroxyalkanoate resin in an amount of 10% by weight to 100% by weight based on the total weight of the composition for a biodegradable fiber. For example, the content of the polyhydroxyalkanoate resin may be 10% by weight or more, 12% by weight or more, 15% by weight or more, 20% by weight or more, 25% by weight or more, or 30% by weight or more, and 100% by weight or less, 95% by weight or less, 90% by weight or less, 85% by weight or less, 80% by weight or less, 75% by weight or less, or 70% by weight or less. Specifically, the content of the polyhydroxyalkanoate resin may be 10% by weight to 85% by weight, but it is not limited thereto.

The composition for a biodegradable fiber may comprise the biodegradable resin in an amount of 30% by weight or more based on the total weight of the composition for a biodegradable fiber. For example, the content of the biodegradable resin may be 32% by weight or more, 35% by weight or more, 50% by weight or more, 55% by weight or more, or 65% by weight or more. In addition, the content of the biodegradable resin may be 95% by weight or less, 90% by weight or less, 85% by weight or less, 80% by weight or less, or 70% by weight or less.

In addition, the weight ratio of the polyhydroxyalkanoate resin to the biodegradable resin may be 1:0.2 to 4.5. For example, the weight ratio of the polyhydroxyalkanoate resin to the biodegradable resin may be 1:0.2 to 4.2, 1:0.3 to 3.8, 1:0.4 to 3, 1:0.45 to 2.8, 1:0.5 to 2.5, 1:0.8 to 2.4, or 1:1 to 2.35.

In addition, the composition for a biodegradable fiber may further comprise at least one additive selected from the group consisting of pigments, dye absorbers, light absorbers, antioxidants, compatibilizers, weighting agents, nucleating agents, melt strength agents, and slip agents.

The pigment may comprise at least one selected from the group consisting of carbon black and cobalt green. The pigment may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber.

The antioxidant is an additive for preventing decomposition by ozone or oxygen, preventing oxidation during storage, or preventing deterioration of physical properties. Common antioxidants may be used as long as the effects of the present invention are not impaired.

Specifically, the antioxidant may comprise at least one selected from the group consisting of hindered phenol-based antioxidants and phosphate-based (phosphorus-based) antioxidants.

The hindered phenol-based antioxidant may comprise, for example, at least one selected from the group consisting of 4,4'-methylene-bis(2,6-di-t-butylphenol), octadecyl-3-(3,5-di-t-butyl-4-hydroxyphenyl)propionate, pentaerythritol tetrakis[3-(3,5-di-t-butyl-4-hydroxyphenyl)propionate), and 3,9-bis[2-[3-(3-tert-butyl-4-hydroxy-5-methylphenyl)propionyloxy]-1,1-dimethylethyl]-2,4, 8,10-tetraoxaspiro[5.5]undecane.

The phosphate-based (phosphorus-based) antioxidant may comprise, for example, at least one selected from the group consisting of tris-(2,4-di-t-butylphenyl)phosphite, bis-(2,4-di-t-butylphenyl)pentaerythritol-diphosphite, bis-(2,6-di-t-butyl-4-methylphenyl)pentaerythritol-diphosphite, distearyl-pentaerythritol-diphosphite, [bis(2,4-di-t-butyl-5-methylphenoxy)phosphino]biphenyl, and N,N-bis[2-[[2,4,8,10-tetrakis(1,1-dimethylethyl)dibenzo[d,f][1,3,2]dioxyphosphepin-6-yl]oxy]-ethyl]ethanamine.

The antioxidant may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the antioxidant satisfies the above range, the physical properties of a fiber may be enhanced, and it may be more advantageous for achieving the desired effects of the present invention.

The compatibilizer is an additive for imparting compatibility by removing the releasability of the biodegradable resin and/or the PHA resin. Common compatibilizers may be used as long as the effects of the present invention are not impaired.

Specifically, the compatibilizer may comprise at least one selected from the group consisting of polyvinyl acetates (PVAc), isocyanates, polypropylene carbonates, glycidyl methacrylates, ethylene vinyl alcohols, polyvinyl alcohols (PVA), ethylene vinyl acetates, and maleic anhydrides.

The compatibilizer may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the compatibilizer satisfies the above range, the physical properties of the fiber may be enhanced by increasing the compatibility between the resins used, and it may be more advantageous for achieving the desired effects of the present invention.

The weighting agent is an inorganic material and an additive for increasing the moldability by increasing the crystallization rate during the molding process and for reducing the problem of cost increase due to the use of the biodegradable resin. Common inorganic materials may be used as long as the effects of the present invention are not impaired.

The weighting agent may comprise at least one selected from the group consisting of inorganic materials such as zinc and calcium, stearic acid, light or heavy calcium carbonate, silica, talc, kaolin, barium sulfate, clay, calcium oxide, magnesium hydroxide, titanium oxide, carbon black, and glass fibers.

The weighting agent may have an average particle size of 0.5 µm to 5 µm. For example, the average particle size of the weighting agent may be 0.5 µm to 4.8 µm, 0.5 µm to 4.5 µm, or 0.7 µm to 4 µm. If the average particle size of the weighting agent is less than 0.5 µm, it is difficult for the particles to be dispersed. If it exceeds 5 µm, the size of the particles becomes excessively large, which may impair the effects of the present invention.

The weighting agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the weighting agent satisfies the above range, it may be more advantageous for achieving the desired effects of the present invention.

The nucleating agent is an additive for supplementing or changing the crystallization morphology of a polymer and for enhancing the crystallization (solidification) rate when a melt of the polymer is cooled. In particular, since the PHA resin used in the present invention has a low crystallization rate, the process may not be readily carried out for a lack of crystallization during the process. If the nucleating agent is used to solve this problem, the crystallization rate can be increased to further enhance the processability, moldability, and productivity, and it is possible to effectively achieve the desired physical properties.

Common nucleating agents may be used as long as the effects of the present invention are not impaired. Specifically, the nucleating agent may comprise, for example, a metal compound comprising a single element substance (pure substance) or a composite oxide, a low molecular weight organic compound having a metal carboxylate group, a polymeric organic compound having a metal carboxylate group, a polymeric organic compound, phosphoric acid or phosphorous acid or a metal salt thereof, a sorbitol derivative, thioglycolic anhydride, and p-toluenesulfonic acid or a metal salt thereof, or the like. The nucleating agents may be used alone or in combination thereof.

The metal compound comprising a single element substance (pure substance) or a composite oxide may be at least one selected from the group consisting of, for example, carbon black, calcium carbonate, synthetic silicic acid and its salts, silica, zinc white, clay, kaolin, basic magnesium carbonate, mica, talc, quartz powder, diatomite, dolomite powder, titanium oxide, zinc oxide, antimony oxide, barium sulfate, calcium sulfate, alumina, calcium silicate, and metal salts of organic phosphorus, and boron nitride.

The low molecular weight organic compound having a metal carboxylate group may be at least one selected from the group consisting of, for example, metal salts of octylic acid, toluic acid, heptanoic acid, pelargonic acid, lauric acid, myristic acid, palmitic acid, stearic acid, behenic acid, cerotic acid, montanic acid, melissic acid, benzene acid, p-tert-butylbenzene acid, terephthalic acid, terephthalic acid monomethyl ester, isophthalic acid, and isophthalic acid monomethyl ester.

The polymeric organic compound having a metal carboxylate group may be at least one selected from the group consisting of, for example, metal salts of carboxyl group-containing polyethylene obtained by an oxidation reaction of polyethylene, carboxyl group-containing polypropylene obtained by an oxidation reaction of polypropylene, copolymers of acrylic acid or methacrylic acid with olefins (such as ethylene, propylene, and butene-1), a copolymer of acrylic acid or methacrylic acid with styrene, a copolymer of an olefin and maleic anhydride, and a copolymer of styrene and maleic anhydride.

The polymeric organic compound may be at least one selected from the group consisting of, for example, alpha-olefins branched to the carbon atom at position 3 and having 5 or more carbon atoms (such as 3,3-dimethylbutene-1,3-methylbutene-1,3-methylpentene-1,3-methylhexene-1 and 3,5,5-trimethylhexene-1), polymers of vinylcycloalkanes (such as vinylcyclopentane, vinylcyclohexane, and vinylnorbomane), polyalkylene glycols (such as polyethylene glycol and polypropylene glycol), poly(glycolic acid), cellulose, cellulose esters, and cellulose ethers.

The phosphoric acid or phosphorous acid or a metal salt thereof may be at least one selected from the group consisting of, for example, metal salts of diphenyl phosphate, diphenyl phosphite, bis(4-tert-butylphenyl)phosphate, and methylene bis-(2,4-tert-butylphenyl)phosphate. The sorbitol derivative may be, for example, bis(p-methylbenzylidene) sorbitol or bis(p-ethylbenzylidene) sorbitol.

The nucleating agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the nucleating agent satisfies the above range, the crystallization rate can be increased to enhance the processability, and it is possible to further enhance the productivity and moldability by enhancing the crystallization rate during, for example, the cutting step for producing pellets in the preparation process.

The melt strength agent is an additive for enhancing the melt strength of reactants. Common melt strength agents may be used as long as the effects of the present invention are not impaired.

Specifically, the melt strength agent may comprise at least one selected from the group consisting of polyesters, styrene-based polymers (such as acrylonitrile butadiene styrene and polystyrene), polysiloxanes, organomodified siloxane polymers, and maleic anhydride-grafted ethylene propylene diene monomer (MAH-g-EPDM).

The melt strength agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the melt strength agent satisfies the above range, it may be more advantageous for achieving the desired effects of the present invention.

The slip agent is an additive for enhancing the slip properties (slippery properties) during extrusion and for preventing fiber surfaces from sticking to each other. Specifically, common slip agents may be used as long as the effects of the present invention are not impaired. For example, the slip agent may be at least one selected from the group consisting of erucamide, oliamide, and stearamide.

The slip agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber. As the content of the slip agent satisfies the above range, the processability, productivity, and moldability may be further enhanced, and it may be more advantageous for achieving the desired effects of the present invention.

The biodegradable resin composition may comprise a crosslinking agent and/or a stabilizer as other additives.

The crosslinking agent is an additive for modifying the properties of the PHA resin and increasing the molecular weight of the resin. Common crosslinking agents may be used as long as the effects of the present invention are not impaired.

For example, the crosslinking agent may be at least one selected from the group consisting of fatty acid esters, natural oil containing an epoxy group (epoxylated), diallyl phthalate, pentaerythritol tetraacrylate, trimethylolpropane triacrylate, pentaerythritol triacrylate, dipentaerythritol pentaacrylate, diethylene glycol dimethacrylate, and bis(2-methacryloxyethyl)phosphate.

The crosslinking agent may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber.

The stabilizer may be at least one selected from the group consisting of trimethyl phosphate, triphenyl phosphate, trimethyl phosphine, phosphoric acid, and phosphorous acid.

The stabilizer may be further employed in an amount of 0.01% by weight to 20% by weight, 0.01% by weight to 15% by weight, 0.01% by weight to 12% by weight, 0.01% by weight to 10% by weight, 0.01% by weight to 8% by weight, 0.01% by weight to 5% by weight, 0.2% by weight to 4.5% by weight, 0.2% by weight to 4% by weight, or 0.5% by weight to 3% by weight, based on the total weight of the composition for a biodegradable fiber.

According to still another embodiment of the present invention, the composition for a biodegradable fiber may further comprise biomass.

As the composition for a biodegradable fiber comprises biomass, it is possible to enhance biodegradability, as well as to improve the soil. That is, the biomass has excellent biodegradability, is readily disrupted when undecomposed, improves fertilizer, and increases soil strength, thereby producing a soil improvement effect.

The biomass may be employed in an amount of 5 to 50% by weight based on the total weight of the composition for a biodegradable fiber. Specifically, the content of the biomass may be 10% by weight to 48% by weight, 15% by weight to 48% by weight, 20% by weight to 45% by weight, 20% by weight to 43% by weight, or 20% by weight to 40% by weight, based on the total weight of the composition for a biodegradable fiber. As the content of the biomass satisfies the above range, the biodegradability is further enhanced, a soil improvement effect is produced, and the crosslinking strength with the PHA resin is improved, whereby it is possible to effectively achieve the desired effects of the present invention.

The composition for a biodegradable fiber may have a melt flow index of 1 g/10 minutes to 30 g/10 minutes measured at 190°C and 2.16 kg according to ASTM D1238. For example, the melt flow index of the composition for a biodegradable fiber measured at 190°C and 2.16 kg according to ASTM D1238 may be 2 g/10 minutes to 28 g/10 minutes, 2.3 g/10 minutes to 26 g/10 minutes, 2.5 g/10 minutes to 22 g/10 minutes, 3.3 g/10 minutes to 20 g/10 minutes, 3.5 g/10 minutes to 19 g/10 minutes, 4 g/10 minutes to 18.5 g/10 minutes, 4.5 g/10 minutes to 18 g/10 minutes, 1.5 g/10 minutes to 10 g/10 minutes, 2.5 g/10 minutes to 8.5 g/10 minutes, 3.2 g/10 minutes to 6.5 g/10 minutes, 4.2 g/10 minutes to 6 g/10 minutes, 11 g/10 minutes to 25 g/10 minutes, 11.5 g/10 minutes to 21 g/10 minutes, or 12 g/10 minutes to 17.5 g/10 minutes.

In addition, the composition for a biodegradable fiber may have a melt flow index of 35 g/10 minutes to 130 g/10 minutes measured at 210°C and 2.16 kg according to ASTM D1238. For example, the melt flow index of the composition for a biodegradable fiber measured at 210°C and 2.16 kg according to ASTM D1238 may be 40 g/10 minutes to 120 g/10 minutes, 42 g/10 minutes to 115 g/10 minutes, 48 g/10 minutes to 112 g/10 minutes, 50 g/10 minutes to 110 g/10 minutes, or 55 g/10 minutes to 108 g/10 minutes.

The melt flow index measured for the composition for a biodegradable fiber according to ASTM D1238 may be measured for pellets prepared using the composition for a biodegradable fiber according to ASTM D1238.

Specifically, the melt flow index may be measured according to ASTM D1238 for biodegradable pellets prepared by feeding the composition for a biodegradable fiber into a twin-screw extruder, mixing, and melt-extruding it. More specifically, the biodegradable pellets may be prepared by setting the screw rotation speed of the twin-screw extruder to 200 rpm, mixing the composition for a biodegradable fiber while raising the internal temperature from 50°C to 170°C, melt-extruding it at a pressure of 12 bar and a temperature of 177°C, and using an under-water cutter system.

The composition for a biodegradable fiber may have a glass transition temperature (Tg) of -35°C to 15°C, -25°C to 5°C, -20°C to 1°C, or -18°C to -5°C, and a melting temperature (Tm) of 105°C to 200°C, 106°C to 195°C, 110°C to 180°C, or 113°C to 173°C, as measured by a differential scanning calorimeter (DSC).

In addition, the composition for a biodegradable fiber may have a decomposition temperature (Td, weight loss of 5%) of 220°C or higher, 230°C or higher, 240°C or higher, 250°C or higher, or 260°C or higher, 220°C to 275°C, 235°C to 273°C, 240°C to 300°C, 245°C to 285°C, 255°C to 280°C, 260°C to 275°C, or 263°C to 270°C, as measured by a thermogravimetric analyzer (TGA).

### Biodegradable fiber

The biodegradable fiber according to another embodiment of the present invention comprises a polyhydroxyalkanoate resin comprising a 4-hydroxybutyrate (4-HB) repeat unit, wherein the strength measured according to ASTM D3822 is 0.5 g/d to 10 g/d.

The biodegradable fiber may be prepared using the composition for a biodegradable fiber. Details on the polyhydroxyalkanoate resin are described above.

For example, the biodegradable fiber may have a strength of 0.5 g/d or more, 0.6 g/d or more, 0.75 g/d or more, 0.8 g/d or more, 0.9 g/d or more, 1 g/d or more, 1.1 g/d or more, 1.2 g/d or more, 1.5 g/d or more, 1.8 g/d or more, or 2 g/d or more, 10 g/d or less, 8.5 g/d or less, 7 g/d or less, 5.5 g/d or less, 5 g/d or less, 4.8 g/d or less, 4.5 g/d or less, 4.2 or less, 3.9 g/d or less, 3.5 g/d or less, 3.2 g/d or less, 2.9 g/d or less, or 2.8 g/d or less, and 0.5 g/d to 10 g/d, 0.6 g/d to 8 g/d, 0.7 g/d to 6 g/d, 0.9 g/d to 3.5 g/d, 1.1 g/d to 4.0 g/d, 1.2 g/d to 3.8 g/d, 1.3 g/d to 3.5 g/d, 1.5 g/d to 3.2 g/d, 1.8 g/d to 3.1 g/d, 1.9 g/d to 2.9 g/d, or 2 g/d to 2.8 g/d, as measured according to ASTM D3822.

In addition, the biodegradable fiber may have a diameter of 0.05 mm to 10 mm and a fineness of 100 deniers to 10,000 deniers. For example, the biodegradable fiber may be a monofilament, wherein the diameter of the biodegradable fiber may be 0.06 mm to 8 mm, 0.08 mm to 6 mm, 0.1 mm to 4 mm, 0.15 mm to 2 mm, 0.2 mm to 1 mm, or 0.25 mm to 0.6 mm, and the fineness of biodegradable fiber may be 120 deniers to 8,500 deniers, 150 deniers to 5,500 deniers, 200 deniers to 4,000 deniers, 500 deniers to 2,500 deniers, 650 deniers to 2,200 deniers, 700 deniers to 1,950 deniers, 800 deniers to 1,350 deniers, 900 deniers to 1,800 deniers, or 950 deniers to 1,600 deniers.

In addition, the biodegradable fiber may have an elongation of 10% or more, 12% or more, 15% or more, 20% or more, 25% or more, 32% or more, 35% or more, 40% or more, 45% or more, 50% or more, or 60% or more, and 1,000% or less, 850% or less, 650% or less, 500% or less, 350% or less, 200% or less, 130% or less, 90% or less, 80% or less, or 75% or less.

The biodegradable fiber may have a weight average molecular weight of 300,000 g/mole or more or 500,000 g/mole or more, 10,000 g/mole to 5,000,000 g/mole, 20,000 g/mole to 4,000,000 g/mole, or 50,000 g/mole to 3,000,000 g/mole.

According to another embodiment of the present invention, the biodegradable fiber may be a composite fiber of a heterogeneous cross-section or a composite fiber of two or more or three or more components.

The heterogeneous cross-section fiber may have a cross-section of a circle, ellipse, or polygon, but it is not limited thereto.

In addition, the biodegradable fiber may be a sheath-core type comprising a core part and a sheath part, a side-by-side type, a sea-islands type, or a segmented-pie type.

In the sheath-core type, the cross-section of the core part and that of the sheath part may be different from each other. For example, the cross-section of the core part may be circular, and the cross-section of the sheath part may be in the shape of a donut, but they are not limited thereto.

In addition, the biodegradable fiber may be a two-component composite fiber in which the sheath part and the core part each comprise a different single-component resin. It may be a three-component composite fiber in which the sheath part comprises a single-component resin, and the core part comprises a at least two-component resin, or the core part comprises a single-component resin, and the sheath part comprises a at least two-component resin. In addition, the biodegradable fiber may be a composite fiber in which the sheath part and the core part each comprise a at least two-component resin.

For example, the core part may comprise the polyhydroxyalkanoate resin, and the sheath part may comprise a biodegradable resin. For example, the biodegradable resin may be at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

The weight ratio of the core part to the sheath part may be 5:95 to 95:5. For example, the weight ratio of the core part to the sheath part may be 5:95 to 85:15, 7:93 to 80:20, 10:90 to 75:25, or 10:90 to 70:30.

### Process for preparing a biodegradable fiber

The process for preparing a biodegradable fiber according to still another embodiment of the present invention comprises spinning and drawing a composition for a biodegradable fiber or pellets prepared by melt-extruding the same, wherein the composition for a biodegradable fiber comprises a polyhydroxyalkanoate resin comprising a 4-hydroxybutyrate (4-HB) repeat unit, and the degradation temperature (Td, weight loss of 5%) measured by a thermogravimetric analyzer (TGA) is 220°C or higher.

Details on the composition for a biodegradable fiber are as described above.

Specifically, in the process for preparing a biodegradable fiber according to still another embodiment of the present invention, the composition for a biodegradable fiber may be directly fed to a device and spun and then drew, or pellets prepared by melt-extrusion of the composition for a biodegradable fiber are fed to a device and spun and then drew, to thereby prepare a biodegradable fiber.

As the spinning step is followed by the drawing step, the diameter or length of a biodegradable fiber can be more effectively controlled. Specifically, if the length or diameter of a biodegradable fiber is controlled by the spinning or melt-spinning step alone, the productivity and processability may be deteriorated.

According to still another embodiment of the present invention, it may further comprise melt-extruding the composition for a biodegradable fiber at 150°C to 200°C to prepare pellets.

Specifically, the melt-extrusion may be carried out at a pressure of 6 bar to 30 bar and a temperature of 150°C to 200°C. For example, the melt-extrusion may be carried out at a pressure of 7 bar to 28 bar or 8 bar to 26 bar and a temperature of 155°C to 190°C or 165°C to 185°C using a single-screw extruder or twin-screw extruder.

In addition, a step of mixing with a temperature raised from 50°C to 170°C using a single-screw extruder or twin-screw extruder may be further carried out before the melt-extrusion step.

In addition, after the melt-extrusion step, the melt-extrudate may be cooled to 15°C or lower, 10°C or lower, or 6°C or lower, and then cut to prepare biodegradable pellets, but it is not limited thereto.

In addition, the spinning speed may be 10 mpm to 500 mpm. For example, the spinning speed may be 10 mpm to 450 mpm, 10 mpm to 400 mpm, or 15 mpm to 400 mpm.

In addition, the drawing may be carried out by cold drawing or hot drawing at a drawing ratio of 1.1 times or more. For example, the drawing may be carried out at a drawing ratio of 1.1 times or more, 2.5 times or more, 3.5 times or more, 5 times or more, 5.5 times or more, 6 times or more, 6.5 times or more, or 7 times or more.

The cold drawing may be carried out at a chamber temperature of 25°C to 35°C and a roller temperature of 25°C to 35°C. The hot drawing may be carried out at a chamber temperature of 150°C to 200°C and a roller temperature of 80°C to 130°C.

According to still another embodiment of the present invention, the step of spinning pellets may be a step of melt-spinning the pellets at 140°C to 190°C. Specifically, the biodegradable pellets are extruded, melted and spun through a nozzle, cooled, and then wound with a roller to prepare a biodegradable fiber.

For example, the pellets may be melt-spun at 150°C to 190°C, 155°C to 190°C, or 160°C to 185°C. In such an event, a conventional melt-spinning apparatus may be used without limitation. For example, it may be carried out using a melt-spinning apparatus based on a single-screw extruder, but it is not limited thereto.

In addition, the melt-spinning apparatus may comprise a melting section, a nozzle section comprising a filter, a draft section between the nozzle holes and the winding roller, and a winding section. The melting temperature of the melt-spinning apparatus, the diameter of the nozzle holes, the length of the nozzle holes, the ratio of the length to the diameter of the nozzle holes, the size of the nozzle inner filter, the discharged amount through the nozzle, the length of the draft section, the spinning speed, the cooling temperature, the winding speed may be controlled to prepare a biodegradable fiber having desired physical properties.

According to still another embodiment of the present invention, it may further comprise, prior to the melt-spinning step, drying the pellets at 40°C to 60°C for 10 hours or longer.

For example, prior to the melt-spinning step, a step of drying the pellets at 40°C to 58°C or 42°C to 60°C for 11 hours or longer or 12 hours or longer may be further carried out.

In addition, the drying step may be carried out until the resin moisture content of the pellets is 2,000 ppm or less, 1,500 ppm or less, 1,100 ppm or less, 500 ppm or less, 300 ppm or less, 150 ppm or less, 100 ppm or less, 60 ppm or less, or 50 ppm or less, and it may be carried out by hot air drying or dehumidification drying, but it is not limited thereto.

According to still another embodiment of the present invention, the step of spinning a composition for a biodegradable fiber may be carried out using a composite spinning apparatus. For example, the composite spinning apparatus may be a sheath-core composite spinning apparatus.

Specifically, the composition for a biodegradable fiber may be directly fed to the core part or the sheath part of the sheath-core composite spinning apparatus to prepare a biodegradable fiber.

More specifically, the composition for a biodegradable fiber may be fed to the core part or the sheath part, and a biodegradable resein comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the core part or the sheath part.

For example, the composition for a biodegradable fiber may be fed to the core part, and a biodegradable resin comprising at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS) may be fed to the sheath part.

In addition, the weight ratio of the raw materials fed to the core part to the sheath part may be 5:95 to 95:5, 5:95 to 85:15, 7:93 to 80:20, 10:90 to 75:25, or 10:90 to 70:30.

### Mode for the Invention

Hereinafter, the present invention will be described in more detail with reference to the following examples. But the following Examples are intended to illustrate the present invention, and the scope of the Examples is not limited thereto only.

### [Example]

### Preparation of biodegradable pellets

### Example 1-1

30% by weight of a polyhydroxyalkanoate (PHA) resin (3-HB-co-4-HB, manufacturer: CJ) comprising 100% by weight of a second PHA resin (scPHA(a), 4-hydroxybutyrate (4-HB) content: 8% by weight, weight average molecular weight (Mw): 600,000 g/mole, melt flow index at 165°C and 5 kg: 1.1 g/10 minutes) and 70% by weight of a polylactic acid (PLA, manufacturer: Total Corbion) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 190 rpm, mixing the composition while raising the internal temperature from 50°C to 170°C, melt-extruding it at a pressure of 14 bar and a temperature of 176°C, and using a strand cutting method.

### Example 1-2

30% by weight of a polyhydroxyalkanoate (PHA) resin (3-HB-co-4-HB, manufacturer: CJ) comprising 100% by weight of a second PHA resin (scPHA(b), 4-hydroxybutyrate (4-HB) content: 17% by weight, weight average molecular weight (Mw): 600,000 g/mole, melt flow index at 165°C and 5 kg: 4.86 g/10 minutes, melt flow index at 190°C: 19.72 g/10 minutes) and 70% by weight of a polylactic acid (PLA, manufacturer: Total Corbion) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 17 bar and a temperature of 180°C, and using a strand cutting method.

### Example 1-3

Biodegradable pellets were prepared in the same manner as in Example 1-1, except that a polybutylene adipate terephthalate (PBAT) was used instead of the polylactic acid.

### Example 1-4

Biodegradable pellets were prepared in the same manner as in Example 1-2, except that a polybutylene adipate terephthalate (PBAT) was used instead of the polylactic acid.

### Example 1-5

30% by weight of a polyhydroxyalkanoate (PHA) resin (3-HB-co-4-HB, manufacturer: CJ) comprising 100% by weight of a second PHA resin (scPHA(a), 4-hydroxybutyrate (4-HB) content: 8% by weight, weight average molecular weight (Mw): 600,000 g/mole, melt flow index at 165°C and 5 kg: 1.1 g/10 minutes) and 70% by weight of a polybutylene succinate (PBS) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 12 bar and a temperature of 177°C, and using a strand cutting method.

### Example 1-6

30% by weight of a polyhydroxyalkanoate (PHA) resin (3-HB-co-4-HB, manufacturer: CJ) comprising 100% by weight of a second PHA resin (scPHA(b), 4-hydroxybutyrate (4-HB) content: 17% by weight, weight average molecular weight (Mw): 600,000 g/mole, melt flow index at 165°C and 5 kg: 19.72 g/10 minutes, melt flow index at 190°C: 19.72 g/10 minutes) and 70% by weight of a polybutylene succinate (PBS) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 12 bar and a temperature of 177°C, and using a strand cutting method.

### Example 1-7

30% by weight of a polyhydroxyalkanoate (PHA) resin (3-HB-co-4-HB, manufacturer: CJ) comprising 25% by weight of a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) and 75% by weight of a second PHA resin (scPHA(a), 4-hydroxybutyrate (4-HB) content: 8% by weight, weight average molecular weight (Mw): 300,000 g/mole, melt flow index at 165°C and 5 kg: 1.1 g/10 minutes) and 70% by weight of a polylactic acid (PLA, manufacturer: Total Corbion) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 21 bar and a temperature of 178°C, and using a strand cutting method.

### Example 1-8

30% by weight of a polyhydroxyalkanoate (PHA) resin (3-HB-co-4-HB, manufacturer: CJ) comprising 50% by weight of a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) and 50% by weight of a second PHA resin (scPHA(a), 4-hydroxybutyrate (4-HB) content: 8% by weight, weight average molecular weight (Mw): 600,000 g/mole, melt flow index at 165°C and 5 kg: 1.1 g/10 minutes) and 70% by weight of a polylactic acid (PLA, manufacturer: Total Corbion) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 14 bar and a temperature of 175°C, and using a strand cutting method.

### Example 1-9

Biodegradable pellets were prepared in the same manner as in Example 1-7, except that a polybutylene adipate terephthalate (PBAT) was used instead of the polylactic acid.

### Example 1-10

Biodegradable pellets were prepared in the same manner as in Example 1-8, except that a polybutylene adipate terephthalate (PBAT) was used instead of the polylactic acid.

### Example 1-11

Biodegradable pellets were prepared in the same manner as in Example 1-5, except that a polyhydroxyalkanoate (PHA) resin (3-HB-co-4-HB, manufacturer: CJ) comprising 25% by weight of a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) and 75% by weight of a second PHA resin (scPHA(a), 4-hydroxybutyrate (4-HB) content: 8% by weight, weight average molecular weight (Mw): 600,000 g/mole, melt flow index at 165°C and 5 kg: 1.1 g/10 minutes) was used.

### Example 1-12

Biodegradable pellets were prepared in the same manner as in Example 1-5, except that a polyhydroxyalkanoate (PHA) resin (3-HB-co-4-HB, manufacturer: CJ) comprising 50% by weight of a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) and 50% by weight of a second PHA resin (scPHA(a), 4-hydroxybutyrate (4-HB) content: 8% by weight, weight average molecular weight (Mw): 600,000 g/mole, melt flow index at 165°C and 5 kg: 1.1 g/10 minutes) was used.

### Example 1-13

30% by weight of a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) and 70% by weight of a polylactic acid (PLA, manufacturer: Total Corbion) were mixed, followed by the addition thereto of 1 phr of a polyvinyl acetate (PVAc, manufacturer: Wacker) to prepare a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 21 bar and a temperature of 178°C, and using a strand cutting method.

### Example 1-14

Biodegradable pellets were prepared in the same manner as in Example 1-13, except that 40% by weight of the first PHA resin and 60% by weight of the polylactic acid were used.

### Example 1-15

Biodegradable pellets were prepared in the same manner as in Example 1-13, except that 50% by weight of the first PHA resin and 50% by weight of the polylactic acid were used.

### Comparative Example 1-1

1 phr of a polyvinyl acetate (PVAc, manufacturer: Wacker) was added to 100% by weight of a polylactic acid (PLA, manufacturer: Total Corbion) to preapre a composition for a biodegradable fiber.

Thereafter, the composition was fed to a twin-screw extruder, mixed, and melt-extruded to prepare biodegradable pellets. Specifically, the biodegradable pellets were prepared by setting the screw rotation speed of the twin-screw extruder to 200 rpm, mixing the composition while raising the internal temperature from 50°C to 170°C, melt-extruding it at a pressure of 21 bar and a temperature of 178°C, and using a strand cutting method.

**[Table 1]**

| | PHA (% by weight) | | | PLA (% by weight) | PBAT (% by weight) | PBS (% by weight) | PVAc (phr) |
|---|---|---|---|---|---|---|---|
| | First PHA | Second PHA | | | | | |
| | aPHA (4HB: 33% by weight) | scPHA(a) (4HB: 8% by weight) | scPHA(b) (4HB: 17% by weight) | | | | |
| Ex. 1-1 | - | 30 | - | 70 | - | - | 1 |
| Ex. 1-2 | - | - | 30 | 70 | - | - | 1 |
| Ex. 1-3 | - | 30 | - | - | 70 | - | 1 |
| Ex. 1-4 | - | - | 30 | - | 70 | - | 1 |
| Ex. 1-5 | - | 30 | - | - | - | 70 | 1 |
| Ex. 1-6 | - | - | 30 | - | - | 70 | 1 |
| Ex. 1-7 | 7.5 | 22.5 | - | 70 | - | - | 1 |
| Ex. 1-8 | 15 | 15 | - | 70 | - | - | 1 |
| Ex. 1-9 | 7.5 | 22.5 | - | - | 70 | - | 1 |
| Ex. 1-9 | 15 | 15 | - | - | 70 | - | 1 |
| Ex. 1-9 | 7.5 | 22.5 | - | - | - | 70 | 1 |
| Ex. 1-12 | 15 | 15 | - | - | - | 70 | 1 |
| Ex. 1-13 | 30 | - | - | 70 | - | - | 1 |
| Ex. 1-14 | 40 | - | - | 60 | - | - | 1 |
| Ex. 1-15 | 50 | - | - | 50 | - | - | 1 |
| C. Ex. 1-1 | - | - | - | 100 | - | - | - |

### Test Example 1-1: Melt flow index

The compositions for a biodegradable fiber prepared in Examples 1-1, 1-2, 1-5 to 1-8, and 1-11 to 1-15 were each measured for the melt flow index (g/10 minutes) at 190°C and 2.16 kg according to ASTM D1238.

Specifically, the melt flow index was measured according to ASTM D1238 for the biodegradable pellets of Examples 1-1, 1-2, 1-5 to 1-8, and 1-11 to 1-15, which were prepared by feeding each of the compositions for a biodegradable fiber to a twin-screw extruder, mixing, and melt extruding it.

### Test Example 1-2: Tg and Tm

The compositions for a biodegradable fiber prepared in Examples 1-1, 1-2, 1-5 to 1-8, and 1-11 to 1-15 were each measured for the glass transition temperature (Tg) and melting temperature (Tm) using differential scanning calorimetry (DSC).

Specifically, 5 mg to 20 mg of each of the compositions for a biodegradable fiber was placed in an aluminum pan, and the temperature was raised from 40°C to 180°C at a rate of 10°C/minute using a differential scanning calorimeter, followed by cooling thereof to -50°C at a rate of 10°C/minute to obtain a heat flow curve, from which the glass transition temperature (Tg) and the melting temperature (Tm) were measured.

### Test Example 1-3: Td

The compositions for a biodegradable fiber prepared in Examples 1-1, 1-2, 1-5 to 1-8, and 1-11 to 1-15 were each measured for the decomposition temperature (Td) using a thermogravimetric analyzer (TGA).

Specifically, the decomposition temperature (Td) was measured as a temperature at which the weight of each of the compositions for a biodegradable fiber was reduced by 5% from a weight change curve obtained by raising the temperature from room temperature to 600°C at a rate of 10°C/minute using a thermogravimetric analyzer (TGA).

**[Table 2]**

| Item | Melt flow index (g/10 minutes, 190°C and 2.16 kg) | Tg (°C) | Tm (°C) | Td (°C) |
|---|---|---|---|---|
| Example 1-1 | 16.5 | -7.0 | 172.5 | 268.90 |
| Example 1-2 | 17.2 | -10.3 | 172.3 | 268.60 |
| Example 1-5 | 13.2 | -6.6 | 113.3 | 268.30 |
| Example 1-6 | 14.8 | -11.0 | 113.5 | 267.80 |
| Example 1-7 | 18.1 | -8.9 | 172.5 | 268.30 |
| Example 1-8 | 14.2 | -10.0 | 172.6 | 268.60 |
| Example 1-11 | 11.9 | -10.0 | 113.5 | 268.70 |
| Example 1-12 | 12.3 | -12.0 | 113.5 | 268.40 |
| Example 1-13 | 5.5 | -17.7 | 172.7 | 268.29 |
| Example 1-14 | 4.8 | -15.7 | 172.2 | 265.15 |
| Example 1-15 | 4.5 | -16.1 | 172.5 | 267.79 |

As can be seen from Table 2 above, the compositions for a biodegradable fiber of Examples 1-1, 1-2, 1-5 to 1-8, and 1-11 to 1-15 each had excellent dispersibility and satisfied glass transition temperature, melting temperature, and decomposition temperature of appropriate numerical ranges; thus, it is possible to readily prepare biodegradable pellets using the same. Further, not only can a biodegradable fiber be prepared directly from the composition for a biodegradable fiber, but also a biodegradable fiber can be prepared using biodegradable pellets obtained from the composition for a biodegradable fiber, which provides convenient selection and application of a process as needed.

### Preparation of a biodegradable fiber

### Example 2-1

The biodegradable pellets prepared in Example 1-1 were dried with hot air or dehumidification for at least 12 hours at about 40°C to 60°C until the moisture content thereof was 100 ppm or less. Then, they were melted and spun using a melt-spinning apparatus based on a single-screw extruder to prepare a biodegradable fiber.

Specifically, the pellets were extruded, melted and spun through a nozzle, cooled, and then wound with a roller to prepare a biodegradable fiber (monofilament).

In such an event, the process conditions of the melt-spinning apparatus were as follows.
- Melting and spinning temperature: about 140°C to 190°C
- Diameter of nozzle holes: 0.1 mm to 5.0 mm (Ψ 0.2 to 5.0)
- Ratio of nozzle length to nozzle hole diameter (length/diameter (L/D)): 1.0 or more
- Size of the nozzle inner filter: 10 µm to 250 µm
- Discharge rate: 5 g/minute/hole to 20 g/minute/hole
- Distance between nozzle hole and winding roller (draft section): 1 m or longer
- Spinning speed: 10 mpm to 500 mpm
- Cooling air temperature: 10°C to 30°C
- Winding speed: 10 mpm to 500 mpm
- Drawing ratio: 5.0 times to 7.0 times
- Drawing temperature

: Cold drawing (chamber temperature: 25°C to 35°C, roller temperature: 25°C to 35°C)
: Hot drawing (chamber temperature: 150°C to 200°C, roller temperature: 80°C to 130°C)

### Examples 2-2 to 2-15 and Comparative Example 2-1

Biodegradable fibers were each prepared in the same manner as in Example 2-1, except that the biodegradable pellets prepared in Examples 1-2 to 1-15 and Comparative Example 1-1 were used, respectively.

### Test Example 2-1: Fineness of a fiber

The biodegradable fibers prepared in Examples 2-1, 2-2, 2-5, 2-6, 2-8, and 2-12 to 2-15 and Comparative Example 2-1 were each measured for the fineness (denier, D) according to the skein method of KS K ISO 2060.

In such an event, the denier (D) is a unit indicating the fineness of a fiber or yarn, and the weight of a fiber or yarn of 9,000 m is expressed in grams.

### Test Example 2-2: Strength and elongation of a fiber

The biodegradable fibers prepared in Examples 2-1, 2-2, 2-5, 2-6, 2-8, and 2-12 to 2-15 and Comparative Example 2-1 were each measured for the strength (g/d) and elongation (%) according to ASTM D3822.

Specifically, when a fiber is drew until it is broken with a constant force, the value (g/d) obtained by dividing the applied load by the denier (g/d) is strength, and the value (%) expressed as a percentage of the initial length to the drew length is elongation.

**[Table 3]**

| | Process | | | Biodegradable fiber | | | |
|---|---|---|---|---|---|---|---|
| | Melting and spinning Temp. (°C) | Drawing ratio (times) | Drawing Temp. | Diameter (mm) | Fineness (denier) | Strength (g/d) | Elongation (%) |
| Ex. 2-1 | 190 | 5.5 | Hot drawing | 0.38 | 1,245 | 2.1 | 37 |
| Ex. 2-2 | 190 | 5.5 | Hot drawing | 0.34 | 1,134 | 2.4 | 45 |
| Ex. 2-5 | 190 | 5.5 | Hot drawing | 0.38 | 1,307 | 2.2 | 74 |
| Ex. 2-6 | 190 | 5.0 | Hot drawing | 0.38 | 1,388 | 2.0 | 81 |
| Ex. 2-8 | 190 | 5.5 | Hot drawing | 0.36 | 1,114 | 2.6 | 45 |
| Ex. 2-12 | 190 | 5.0 | Hot drawing | 0.39 | 1,288 | 2.1 | 80 |
| Ex. 2-13 | 190 | 5.0 | Hot drawing | 0.38 | 1,341 | 2.2 | 34 |
| | 190 | 6.0 | Hot drawing | 0.34 | 1,118 | 2.7 | 24 |
| | 190 | 6.5 | Hot drawing | 0.32 | 1,026 | 2.8 | 23 |
| Ex. 2-14 | 190 | 5.0 | Hot drawing | 0.38 | 1,299 | 2.0 | 27 |
| | 190 | 6.0 | Hot drawing | 0.35 | 1,100 | 2.2 | 21 |
| | 190 | 6.5 | Hot drawing | 0.33 | 898 | 2.7 | 22 |
| | 190 | 7.0 | Hot drawing | 0.30 | 923 | 2.2 | 17 |
| Ex. 2-15 | 190 | 5.0 | Hot drawing | 0.35 | 1,232 | 1.6 | 26 |
| | 190 | 6.0 | Hot drawing | 0.28 | 1,084 | 1.6 | 18 |
| | 190 | 7.0 | Hot drawing | 0.27 | 910 | 1.9 | 16 |
| C. Ex. 2-1 | 190 | 5.0 | Hot drawing | 0.42 | 1,445 | 3.1 | 39 |
| | | 6.0 | Hot drawing | 0.37 | 1,268 | 3.0 | 24 |

As can be seen from Table 3, the biodegradable fibers prepared in Examples 2-1, 2-2, 2-5, 2-6, 2-8, and 2-12 to 2-15 each had diameter, fineness, strength, and elongation characteristics within the desired ranges. Specifically, the biodegradable fibers prepared in Examples 2-1, 2-2, 2-5, 2-6, 2-8, and 2-12 to 2-15 were excellent in flexibility, strength, elongation, productivity, and processability since they were each prepared using the biodegradable pellets of Examples 1-1, 1-2, 1-5, 1-6, 1-8, and 1-12 to 1-15 having excellent spinnability.

### Preparation of a biodegradable fiber

### Example 3-1

A composition for a biodegradable fiber comprising a polyhydroxyalkanoate (PHA) resin (3-HB-co-4-HB, manufacturer: CJ) comprising 100% by weight of a second PHA resin (scPHA(c), 4-hydroxybutyrate (4-HB) content: 6% by weight, weight average molecular weight (Mw): 410,000 g/mole, melt flow index at 165°C and 5 kg: 2.88 g/10 minutes) was prepared as a core part, and a polybutylene succinate (PBS) was prepared as a sheath part.

Thereafter, 10% by weight of the core composition and 90% by weight of the PBS were spun at a spinning speed of 100 mpm to 150 mpm using a sheath-core composite spinning apparatus and drew at a drawing ratio of 6.0 times to prepare a biodegradable fiber. In such an event, the drawing temperature was as follows.
- Drawing temperature
   : Cold drawing (chamber temperature: 25°C to 35°C, roller temperature: 25°C to 35°C)
   : Hot drawing (chamber temperature: 150°C to 200°C, roller temperature: 80°C to 130°C)

### Examples 3-2 to 3-22

A biodegradable fiber was prepared in the same manner as in Example 3-1, except that the components and process conditions were changed as shown in Tables 4 to 6 below. Here, in Examples 3-17 to 3-22, a first PHA resin (aPHA, 4-hydroxybutyrate (4-HB) content: 33% by weight, weight average molecular weight (Mw): 600,000 g/mole, melt flow index at 165°C and 5 kg: 5.5 g/10 minutes) was used.

### Test Example 3-1: Fineness of a fiber

The biodegradable fibers prepared in Examples 3-1 to 3-22 were each measured for the fineness (denier, D) according to the skein method of KS K ISO 2060.

In such an event, the denier (D) is a unit indicating the fineness of a fiber or yarn, and the weight of a fiber or yarn of 9,000 m is expressed in grams.

### Test Example 3-2: Strength and elongation of a fiber

The biodegradable fibers prepared in Examples 3-1 to 3-22 were each measured for the strength (g/d) and elongation (%) according to ASTM D3822.

Specifically, when a fiber is drew until it is broken with a constant force, the value (g/d) obtained by dividing the applied load by the denier (g/d) is strength, and the value (%) expressed as a percentage of the initial length to the drew length is elongation.

**[Table 4]**

| | Process | | | Biodegradable fiber | | | |
|---|---|---|---|---|---|---|---|
| | Core part (% by weight) | Sheath part (% by weight) | Drawing ratio (times) | Diameter (mm) | Fineness (denier) | Strength (g/d) | Elongation (%) |
| Example 3-1 | scPHA(c) (10) | PBS (90) | 6.0 | 0.33 | 1,129 | 2.8 | 118 |
| Example 3-2 | scPHA(c) (20) | PBS (80) | 6.0 | 0.30 | 1,072 | 2.6 | 90 |
| Example 3-3 | scPHA(c) (30) | PBS (70) | 6.0 | 0.36 | 1,001 | 2.1 | 69 |
| Example | scPHA(c) | PBS | 6.0 | 0.35 | 1,064 | 2.4 | 76 |
| 3-4 | (40) | (60) | | | | | |
| Example 3-5 | scPHA(c) (50) | PBS (50) | 6.0 | 0.38 | 1,357 | 1.9 | 61 |
| Example 3-6 | scPHA(c) (50) | PBS (50) | 6.0 | 0.38 | 1,636 | 1.7 | 40 |
| Example 3-7 | scPHA(c) (60) | PBS (40) | 6.0 | 0.33 | 1,529 | 1.3 | 58 |
| Example 3-8 | scPHA(c) (70) | PBS (30) | 6.0 | 0.35 | 1,437 | 1.2 | 44 |

**[Table 5]**

| | Process | | | Biodegradable fiber | | | |
|---|---|---|---|---|---|---|---|
| | Core part (% by weight) | Sheath part (% by weight) | Drawing ratio (times) | Diameter (mm) | Fineness (denier) | Strength (g/d) | Elongation (%) |
| Example 3-9 | scPHA(c) (10) | PLA (90) | 5.0 | 0.35 | 1,129 | 3.0 | 37 |
| | | | 6.0 | 0.33 | 865 | 3.5 | 28 |
| Example 3-10 | scPHA(c) (20) | PLA (80) | 5.0 | 0.34 | 929 | 3.0 | 37 |
| | | | 6.0 | 0.30 | 789 | 3.4 | 32 |
| Example 3-11 | scPHA(c) (30) | PLA (70) | 5.0 | 0.34 | 958 | 2.3 | 39 |
| | | | 6.0 | 0.33 | 761 | 2.9 | 26 |
| Example 3-12 | scPHA(c) (40) | PLA (60) | 5.0 | 0.38 | 959 | 2.0 | 31 |
| | | | 6.0 | 0.29 | 804 | 2.1 | 27 |
| Example 3-13 | scPHA(c) (50) | PLA (50) | 5.0 | 0.35 | 941 | 1.4 | 27 |
| | | | 6.0 | 0.28 | 828 | 1.5 | 21 |
| Example 3-14 | scPHA(c) (60) | PLA (40) | 5.0 | 0.39 | 1,057 | 1.2 | 36 |
| | | | 6.0 | 0.35 | 909 | 1.5 | 22 |
| Example 3-15 | scPHA(c) (70) | PLA (30) | 5.0 | 0.38 | 1,226 | 1.0 | 31 |

**[Table 6]**

| | Process | | | Biodegradable fiber | | | |
|---|---|---|---|---|---|---|---|
| | Core part (% by weight) | Sheath part (% by weight) | Drawing ratio (times) | Diameter (mm) | Fineness (denier) | Strength (g/d) | Elongation (%) |
| Example 3-16 | aPHA (10) | PLA (90) | 5.0 | 0.40 | 1,430 | 2.7 | 44 |
| | | | 6.0 | 0.39 | 1,230 | 3.0 | 32 |
| Example 3-17 | aPHA (20) | PLA (80) | 5.0 | 0.39 | 1,428 | 2.4 | 40 |
| | | | 6.0 | 0.38 | 1,212 | 2.6 | 28 |
| Example 3-18 | aPHA (30) | PLA (70) | 5.0 | 0.42 | 1,357 | 2.2 | 37 |
| | | | 6.0 | 0.39 | 1,188 | 2.5 | 29 |
| Example 3-19 | aPHA (40) | PLA (60) | 5.0 | 0.35 | 965 | 2.0 | 25 |
| | | | 6.0 | 0.39 | 1,234 | 1.8 | 32 |
| Example 3-20 | aPHA (50) | PLA (50) | 6.0 | 0.38 | 1,481 | 1.6 | 32 |
| Example 3-21 | aPHA (60) | PLA (40) | 5.0 | 0.40 | 1,433 | 1.2 | 27 |
| | | | 6.0 | 0.37 | 1,196 | 1.3 | 23 |
| Example 3-22 | aPHA (70) | PLA (30) | 5.0 | 0.41 | 1,275 | 0.9 | 31 |
| | | | 6.0 | 0.32 | 1,023 | 1.1 | 23 |

As can be seen from Tables 4 to 6, the biodegradable fibers prepared in Examples 3-1 to 3-22 each had diameter, fineness, strength, and elongation characteristics within the desired ranges. Specifically, as the biodegradable fibers of Examples 3-1 to 3-22 were each prepared in a sheath-core type comprising a sheath part and a core part, more specifically, the sheath part comprising the composition for a biodegradable fiber. It is possible to further enhance the processability in a secondary processing for manufacturing products such as clothing and fishing nets, for example, a secondary processing such as dyeing and braiding.

## Claims

1. A composition for a biodegradable fiber, which comprises a polyhydroxyalkanoate resin comprising a 4-hydroxybutyrate (4-HB) repeat unit, wherein the degradation temperature (Td, weight loss of 5%) measured by a thermogravimetric analyzer (TGA) is 220°C or higher.

2. The composition for a biodegradable fiber of claim 1, wherein the polyhydroxyalkanoate resin comprises the 4-hydroxybutyrate (4-HB) repeat unit in an amount of 0.1% by weight to 60% by weight.

3. The composition for a biodegradable fiber of claim 1, wherein the polyhydroxyalkanoate resin further comprises at least one repeat unit selected from the group consisting of 3-hydroxybutyrate (3-HB), 3-hydroxypropionate (3-HP), 3-hydroxyhexanoate (3-HH), 3-hydroxyvalerate (3-HV), 4-hydroxyvalerate (4-HV), 5-hydroxyvalerate (5-HV), and 6-hydroxyhexanoate (6-HH).

4. The composition for a biodegradable fiber of claim 1, wherein the polyhydroxyalkanoate resin comprises a first PHA resin, and the first PHA resin comprises a 4-hydroxybutyrate (4-HB) repeat unit in an amount of 15% by weight to 60% by weight and have a melt flow index (MFI) of 0.1 g/10 minutes to 20 g/10 minutes as measured at 165°C and 5 kg according to ASTM D1238.

5. The composition for a biodegradable fiber of claim 1, wherein the polyhydroxyalkanoate resin comprises a second PHA resin, and the second PHA resin comprises a 4-hydroxybutyrate (4-HB) repeat unit in an amount of 0.1% by weight to 30% by weight and have a melt flow index of 0.1 g/10 minutes to 15 g/10 minutes as measured at 165°C and 5 kg according to ASTM D1238.

6. The composition for a biodegradable fiber of claim 1, wherein the polyhydroxyalkanoate resin comprises a first PHA resin and a second PHA resin, and the content of 4-HB repeat unit of the first PHA resin and the content of 4-HB repeat unit of the second PHA are different from each other.

7. The composition for a biodegradable fiber of claim 6, wherein the weight ratio of the first PHA resin to the second PHA resin is 1:0.5 to 5.

8. The composition for a biodegradable fiber of claim 1, which comprises the polyhydroxyalkanoate resin in an amount of 10% by weight to 100% by weight based on the total weight of the composition for a biodegradable fiber.

9. The composition for a biodegradable fiber of claim 1, wherein the composition for a biodegradable fiber comprises at least one biodegradable resin selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), and thermoplastic starch (TPS).

10. The composition for a biodegradable fiber of claim 9, wherein the biodegradable resin is employed in an amount of 30% by weight or more based on the total weight of the composition for a biodegradable fiber, and the weight ratio of the polyhydroxyalkanoate resin to the biodegradable resin is 1: 0.2 to 4.5.

11. The composition for a biodegradable fiber of claim 1, wherein the composition for a biodegradable fiber comprises at least one additive selected from the group consisting of pigments, dye absorbers, light absorbers, antioxidants, compatibilizers, weighting agents, nucleating agents, melt strength agents, and slip agents.

12. The composition for a biodegradable fiber of claim 1, wherein the composition for a biodegradable fiber has a melt flow index of 1 g/10 minutes to 30 g/10 minutes as measured at 190°C and 2.16 kg and a melt flow index of 35 g/10 minutes to 130 g/10 minutes as measured at 210°C and 2.16 kg according to ASTM D1238, a glass transition temperature (Tg) of -35°C to 15°C and a melting temperature (Tm) of 105°C to 200°C as measured by differential scanning calorimetry (DSC), and a decomposition temperature (Td, weight loss of 5%) of 240°C to 300°C as measured by a thermogravimetric analyzer (TGA).

13. A biodegradable fiber, which comprises a polyhydroxyalkanoate resin comprising a 4-hydroxybutyrate (4-HB) repeat unit, wherein the strength measured according to ASTM D3822 is 0.5 g/d to 10 g/d.

14. The biodegradable fiber of claim 13, wherein the biodegradable fiber has a diameter of 0.05 mm to 10 mm, a fineness of 100 deniers to 10,000 deniers, and an elongation of 25% or more.

15. The biodegradable fiber of claim 13, wherein the biodegradable fiber is a composite fiber of a heterogeneous cross-section or a composite fiber of two or more or three or more components.

16. The biodegradable fiber of claim 15, wherein the biodegradable fiber is a sheath-core type comprising a core part and a sheath part, a side-by-side type, a sea-islands type, or a segmented-pie type.

17. The biodegradable fiber of claim 16, wherein the core part comprises the polyhydroxyalkanoate resin, the sheath part comprises a biodegradable resin, and the biodegradable resin is at least one selected from the group consisting of polybutylene adipate terephthalate (PBAT), polylactic acid (PLA), polybutylene succinate (PBS), polybutylene adipate (PBA), polybutylene succinate-adipate (PBSA), polybutylene succinate-terephthalate (PBST), polyhydroxybutylate-valerate (PHBV), polycaprolactone (PCL), polybutylene succinate adipate terephthalate (PBSAT), polybutyleneethylene adipate succinate (PBEAS), polybutyleneethylene succinate (PBES), and thermoplastic starch (TPS).

18. A process for preparing a biodegradable fiber, which comprises spinning and drawing a composition for a biodegradable fiber or pellets prepared by melt-extruding the same, wherein the composition for a biodegradable fiber comprises a polyhydroxyalkanoate resin comprising a 4-hydroxybutyrate (4-HB) repeat unit, and the degradation temperature (Td, weight loss of 5%) measured by a thermogravimetric analyzer (TGA) is 220°C or higher.

19. The process for preparing a biodegradable fiber of claim 18, wherein the spinning speed is 10 mpm to 500 mpm, the drawing is carried out by cold drawing or hot drawing at a drawing ratio of 1.1 times or more, the cold drawing is carried out at a chamber temperature of 25°C to 35°C and a roller temperature of 25°C to 35°C, and the hot drawing is carried out at a chamber temperature of 150°C to 200°C and a roller temperature of 80°C to 130°C.

20. The process for preparing a biodegradable fiber of claim 18, which further comprises melt-extruding the composition for a biodegradable fiber at 150°C to 200°C to prepare pellets.

21. The process for preparing a biodegradable fiber of claim 20, wherein the step of spinning pellets is melt-spinning the pellets at 140°C to 190°C, and the process further comprises, prior to the melt-spinning step, drying the pellets at 40°C to 60°C for 10 hours or longer.

22. The process for preparing a biodegradable fiber of claim 18, wherein the step of spinning a composition for a biodegradable fiber is carried out using a sheath-core composite spinning apparatus.

23. The process for preparing a biodegradable fiber of claim 22, wherein the weight ratio of raw materials to be fed to the core part and the sheath part is 5:95 to 95:5.

24. The process for preparing a biodegradable fiber of claim 22, wherein the composition for a biodegradable fiber is fed to the core part.
